# EUROPEAN PATENT APPLICATION

(11) **EP 4 156 737 A1**
(43) Date of publication of application: **29.03.2023**
(21) Application number: 21199294.6
(22) Date of filing: 28.09.2021
(51) Int. Cl.: H04W 8/22, H04W 8/24, H04W 48/08, H04W 52/00, H04W 52/02, H04W 84/08

(54) **NETWORK POLICIES BASED ON UE ENERGY CONSUMPTION**

(71) Applicant: Nokia Technologies Oy, 02610 Espoo (FI)
(72) Inventor: PAPAGEORGIOU, Apostolos, 81541 Munich (DE); HE, Mu, 80639 Munich (DE); LAIR, Yannick, 78960 Voisins le Bretonneux (FR); GUPTA, Pallab, 560087 Bangalore (IN)
(74) Representative: Nokia EPO representatives

(57) **Abstract**

It is provided a method comprising: monitoring whether a first terminal establishes a protocol data unit session; requesting energy data of the first terminal if the first terminal establishes the protocol data unit session; receiving the energy data of the first terminal; determining a policy for the protocol data unit session of the first terminal based on the energy data of the first terminal; providing the policy to at least one of the first terminal and a network function involved in the protocol data unit session of the first terminal.

## Description

### Field of the invention

The present disclosure relates to energy consumption of a UE. In particular, it relates to network policies taking into account energy consumption of the UE.

### Abbreviations

- 3GPP: 3^{rd} Generation Partnership Project
- 4G / 5G / 6G: 4^{th} / 5^{th} / 6^{th} Generation
- AF: Application Function
- AM: Access and Mobility
- ATSSS: Access Traffic Steering, Switching and Splitting
- ID: Identifier
- MA: Multi-Access
- MDT: Minimization of Drive Tests
- NAS: Non Access Stratum
- NEF: Network Exposure Function
- NF: Network Function
- NWDAF: Network Data Analytics Function
- PCF: Policy Control Function
- PDU: Protocol Data Unit
- PEF: Policy Enforcement Function
- PMF: Performance Measurement Functionality
- QoS: Quality of Service
- RAT: Radio Access Technology
- RFSP: RAT/Frequency Selection Priority
- SMF: Session Management Function
- TS: Technical Specification
- UDR: Unified Data Repository
- UE: User Equipment
- URSP: UE Route Selection Policy
- UPF: User Plane Function

### Background

The 5G system includes various policies and rules which determine several aspects of the way of operation and the configuration of UEs (User Equipment), either targeting their overall connection to the 5G core network or targeting specific PDU (Protocol Data Unit) Sessions that are established over this connection. Notably, these policies/rules include:
- AM (Access and Mobility) policies (see 3GPP TS 23.503 clause 6.5), e.g. RFSP (RAT/Frequency Selection Priority) Index, which determines which frequencies will be used between a UE and the access network.
- UE policies, e.g. URSP (UE Route Selection Policy, see 3GPP TS 23.503 clause 6.6.2), which determines the features of PDU sessions to be used for application traffic with specific characteristics.
- ATSSS (Access Traffic Steering, Switching and Splitting) rules (see 3GPP TS 23.501 clause 5.32), which determines how to distribute packets of a Multi-access (MA) PDU Session among the different access types (e.g. 3gpp access or non-3gpp-access, which in some cases might translate to wireless access vs wireline access).

These (and other) policies are determined by the PCF (Policy Control Function). Namely, the PCF may determine and provision RFSP indexes, ATSSS rules, and URSP policies. Although 3GPP specifications provide some guidance about how this determination shall be performed, the final policy decision is taken by internal PCF logic, which is up to the implementation. Current standard mechanisms for determining the policies target the satisfaction of QoS (Quality-of-Service-related) requirements.

Current 3GPP specifications include the following mechanisms allowing the UE to influence a policy to be determined by PCF:
- **UE-assisted mode in ATSSS** (see 3GPP TS 23.501, clause 5.32): UEs co-determine the quotas of the traffic that shall be sent via 3gpp and/or non-3gpp access, depending on local information
- **Procedures for "influencing"** certain 5G Core aspects and decisions (e.g. Trafficlnfluence, AMInfluence) include steps for delivering data related (among others) with the UE to the PCF and taking decisions based on such data. However, these "influencing" procedures use very different inputs, and they enable the determination of policies based on application provider requirements, but not based on UE-collected information, while the steps that follow their invocation (in terms of the required sequence of 5GC NF interactions) differ depending on if they impact the control plane or the user plane.

**Network analytics studies** (e.g. 3GPP eNA studies for Releases 16 and 17), have described the following ideas:
- **Usage of "battery indication"** (mentioned in Rel-16 eNA study) for configuring the 5G system. This battery indication is about the UE battery type, e.g. rechargable or not.
- **NWDAF(Network Data Analytics Function)-assisted RFSP selection** (in Rel-17). The proposed solutions are more like an extension of the already existing concept of satisfying Quality-of-Service-related requirements.

### Summary

It is an object of the present invention to improve the prior art.

According to a first aspect of the invention, there is provided an apparatus comprising:
one or more processors, and memory storing instructions that, when executed by the one or more processors, cause the apparatus to perform:
monitoring whether a first terminal establishes a protocol data unit session;
requesting energy data of the first terminal if the first terminal establishes the protocol data unit session;
receiving the energy data of the first terminal;
determining a policy for the protocol data unit session of the first terminal based on the energy data of the first terminal;
providing the policy to at least one of the first terminal and a network function involved in the protocol data unit session of the first terminal.

The instructions, when executed by the one or more processors, may further cause the apparatus to perform:
requesting network analytics data related to energy statistics according to an averaging criterion;
receiving the network analytics data in response to the request; wherein
the policy for the protocol data unit session may be determined additionally based on the network analytics data.

The averaging criterion may comprise at least one of terminals of a same type as the first terminal, a same radio access technology as the one used by the first terminal, a same frequency of the radio access technology as the one used by the first terminal, and a same access type as the one used by the first terminal.

The instructions, when executed by the one or more processors, may cause the apparatus to receive the energy data using non-access stratum signaling.

According to a second aspect of the invention, there is provided an apparatus comprising:
one or more processors, and memory storing instructions that, when executed by the one or more processors, cause the apparatus to perform:
receiving a request for energy data of a terminal;
receiving a report on energy data for the terminal;
preparing a notification on energy data of the terminal based on the report on energy data for the terminal;
providing the notification on energy data in response to the request.

According to a third aspect of the invention, there is provided an apparatus comprising:
one or more processors, and memory storing instructions that, when executed by the one or more processors, cause the apparatus to perform:
retrieving information about energy data of a terminal;
preparing a report on the energy data of the terminal;
receiving a request to provide the report;
providing the report in response to the request.

According to a fourth aspect of the invention, there is provided an apparatus comprising:
one or more processors, and memory storing instructions that, when executed by the one or more processors, cause the apparatus to perform:
receiving a request for energy statistics and an averaging criterion;
requesting energy data of a plurality of terminals fulfilling the averaging criterion;
receiving the energy data of the plurality of terminals in response to the request for the energy data;
preparing energy statistics based on the energy data and the averaging criterion;
providing the energy statistics in response to the request for energy statistics.

The averaging criterion may comprise at least one of a type of the terminals, a radio access technology used by the terminals, a frequency of the radio access technology used by the terminals, and an access type used by the terminals.

The energy data may comprise one or more of the following:
- a respective battery level of each of the terminals;
- a respective battery level threshold crossing of each of the terminals;
- a respective indication of a battery saver mode of each of the terminals;
- a respective indication of a battery charging status of each of the terminals;
- a respective performance statistics for each of the terminals; and
- a respective energy consumption statistics for each of the terminals.

The instructions, when executed by the one or more processors, may cause the apparatus to perform for each of the terminals:
collecting information about a respective access type and/or information about a respective radio access technology;
determining if the respective terminal fulfills the averaging criterion based on the collected information.

According to a fifth aspect of the invention, there is provided a method comprising:
monitoring whether a first terminal establishes a protocol data unit session;
requesting energy data of the first terminal if the first terminal establishes the protocol data unit session;
receiving the energy data of the first terminal;
determining a policy for the protocol data unit session of the first terminal based on the energy data of the first terminal;
providing the policy to at least one of the first terminal and a network function involved in the protocol data unit session of the first terminal.

The method may further comprise:
requesting network analytics data related to energy statistics according to an averaging criterion;
receiving the network analytics data in response to the request; wherein
the policy for the protocol data unit session may be determined additionally based on the network analytics data.

The averaging criterion may comprise at least one of terminals of a same type as the first terminal, a same radio access technology as the one used by the first terminal, a same frequency of the radio access technology as the one used by the first terminal, and a same access type as the one used by the first terminal.

The energy data may be received using non-access stratum signaling.

According to a sixth aspect of the invention, there is provided a method comprising:
receiving a request for energy data of a terminal;
receiving a report on energy data for the terminal;
preparing a notification on energy data of the terminal based on the report on energy data for the terminal;
providing the notification on energy data in response to the request.

According to a seventh aspect of the invention, there is provided a method comprising:
retrieving information about energy data of a terminal;
preparing a report on the energy data of the terminal;
receiving a request to provide the report;
providing the report in response to the request.

According to an eighth aspect of the invention, there is provided a method comprising:
receiving a request for energy statistics and an averaging criterion;
requesting energy data of a plurality of terminals fulfilling the averaging criterion;
receiving the energy data of the plurality of terminals in response to the request for the energy data;
preparing energy statistics based on the energy data and the averaging criterion;
providing the energy statistics in response to the request for energy statistics.

The averaging criterion may comprise at least one of a type of the terminals, a radio access technology used by the terminals, a frequency of the radio access technology used by the terminals, and an access type used by the terminals.

The energy data may comprise one or more of the following:
- a respective battery level of each of the terminals;
- a respective battery level threshold crossing of each of the terminals;
- a respective indication of a battery saver mode of each of the terminals;
- a respective indication of a battery charging status of each of the terminals;
- a respective performance statistics for each of the terminals; and
- a respective energy consumption statistics for each of the terminals.

The method may further comprise:
collecting information about a respective access type and/or information about a respective radio access technology;
determining if the respective terminal fulfills the averaging criterion based on the collected information.

Each of the methods of the fifth to eighth aspects may be a method of setting a policy.

According to a ninth aspect of the invention, there is provided a computer program product comprising a set of instructions which, when executed on an apparatus, is configured to cause the apparatus to carry out the method according to any of the fifth to eighth aspects. The computer program product may be embodied as a computer-readable medium or directly loadable into a computer.

According to some embodiments of the invention, at least one of the following advantages may be achieved:
- energy consumption of UE may be optimized;
- requirements on energy consumption and communication policy may be leveraged;
- no (or no major) impact on UE.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a flowchart according to some example embodiments of the invention;
Fig. 2 shows a flowchart according to some example embodiments of the invention;
Fig. 3 shows an apparatus according to an example embodiment of the invention;
Fig. 4 shows a method according to an example embodiment of the invention;
Fig. 5 shows an apparatus according to an example embodiment of the invention;
Fig. 6 shows a method according to an example embodiment of the invention;
Fig. 7 shows an apparatus according to an example embodiment of the invention;
Fig. 8 shows a method according to an example embodiment of the invention;
Fig. 9 shows an apparatus according to an example embodiment of the invention;
Fig. 10 shows a method according to an example embodiment of the invention; and
Fig. 11 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

The access (types) and frequencies, RFSP indices, ATSSS rules and URSP policies can have a big (UE model- and usage-dependent) impact on the UE's energy/battery consumption that is not predictable by the PCF. Different access (types) and frequencies can potentially lead to different UE power consumption levels, but such information is not known by the PCF. This may lead to PCF determining and delivering policies resulting in non-optimal UE battery consumption.

There are currently no mechanisms for the PCF to target energy consumption of the UE. There aren't even any mechanisms for the PCF to obtain data related to UE energy/battery consumption. In particular, the above described mechanisms allowing the UE to influence the policy are not sufficient to optimize UE energy consumption. Namely:
- The local data used in UE-assisted mode in ATSSS could theoretically include battery-related data, although this is not explicitly specified. *However,* UEs might not have sufficient information to take a decision in an optimal manner with respect to UE energy consumption. For example, UEs might not be aware of the impact that the usage of a certain traffic split (e.g. 30% via 3GPP access and 70% via non-3GPP access) is expected to have on their own energy consumption. Further, the UE-assisted mode of ATSSS is restricted to influencing traffic split across access types and it cannot influence, for example, the used frequencies.
- None of the network analytics studies mentioned above considers UE battery level or UE energy consumption.

In some example embodiments of the invention, the PCF may decide on a policy for the UE (e.g. selection of RFSP, URSP, and ATSSS policies/rules) with regard to energy/battery consumption of the UE. In order to enable the PCF, one or more of the following features may be implemented:
▪ UE data related to energy/battery consumption are provided to the PCF that creates and decides the AM/UE Policies and/or the policies for the Multi-access PDU Sessions (used for ATSSS) of the UE. The MA PDU session is described here as an example, but some example embodiments are applicable to a "normal" (single access) PDU Session, too (instead of or in addition to a MA PDU session).
▪ UE data related to energy/battery consumption are provided to an NWDAF that supports the generation of energy consumption analytics.
▪ The mentioned energy-related data includes:
   i) Current battery level and/or indication of battery level threshold crossing,
   ii) Indication of battery saver mode or battery charging status,
   iii) Performance statistics (e.g., round-trip times between the UE and the core network) per access type, and
   iv) Individual UE energy consumption statistics per access type.
▪ The mentioned energy-related data is provided either by an AF (Application Function) using new or extended NEF/PCF services for influencing PCF decisions or AF services for UE data exposure. The AF may be running on the UE and collect information via interactions with the OS or UE middleware (e.g. android APIs that enable retrieving the battery status). As another option, the AF may run remotely with a counterpart (another application) on the UE which collects the data (as described hereinabove) and informs the remote AF on application layer (e.g. via means not specified by 3GPP). As still another option, the UE may provide the energy-related data using NAS (Non Access Stratum) messages.
▪ The NWDAF may use the energy data to compute statistical data such as "average UE energy/battery consumption and status per RAT/frequency, access type, and device type" (the "device type" may refer to the Type Allocation Code (TAC) of the 3GPP specifications) or similar. Such statistics may be computed per single UE or per group of UEs with similar characteristics, e.g., device type or RAT/frequency.
▪ The PCF subscribes to and receives the analytics computed by the NWDAF and may use the averaged data (if available) together with individual UE data to determine the policies for a specific UE.

As a non-limiting example, PCF may determine a policy as follows:
The PCF receives from the UE:
- its battery level "B"
- some performance data for 3GPP frequency F1 ("p1") and 3GPP frequency F2 ("p2")

In addition, the PCF receives from the NWDAF statistics data that show:
- "UEs of the same type consume X% more energy when they use frequency F1 compared to frequency F2"

The PCF has the following logic:

```
       IF B<10% THEN update ATSSS policy to ensure usage of non-3GPP access;
       ELSE
               IF (B<30% AND X>25 AND p2_is_not_more_than_50%_worse_than_p1)
              THEN select an RFSP index that uses frequency F2;
               ELSE do nothing.
```

For example, PCF may run this logic every time when any of these input data is received, and/or at predefined time intervals.

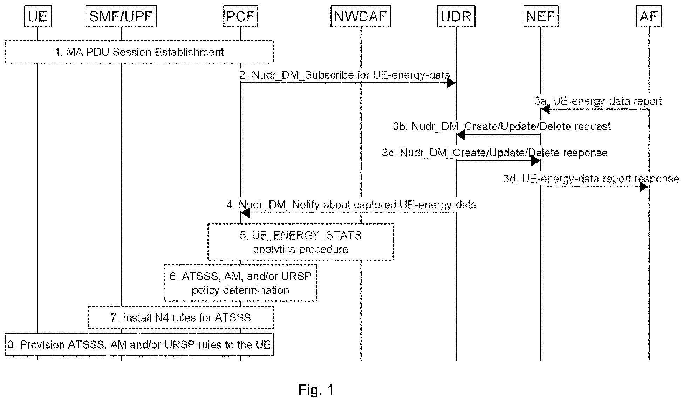

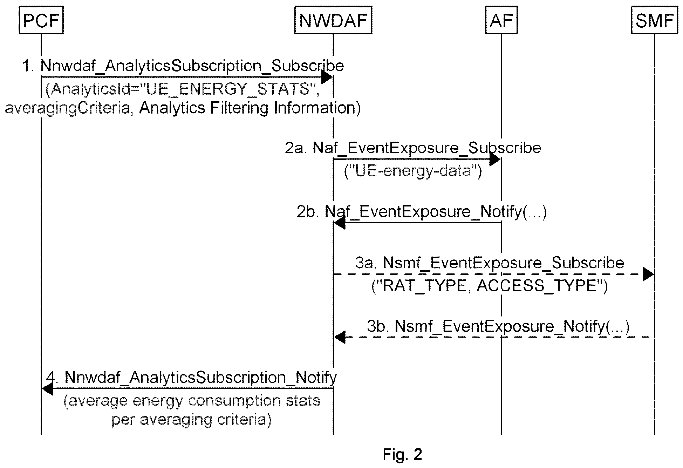

Now, some example embodiments are described at greater detail with reference to Figs. 1 and 2. These embodiments may comprise one or two procedures among:
1. Procedure with which the PCF retrieves energy-related data of different kinds and determines/delivers the energy-impacting policies (see Fig. 1).
2. Procedure with which the NWDAF retrieves energy-related data, computes energy-related analytics, and delivers them to subscribed service consumers (see Fig. 2).

Procedure 2 may be a standalone procedure or a sub-procedure embedded in procedure 1 (as shown in Fig. 1 as an option (= dashed line).

Procedure 1 is for the example of ATSSS policy management. The flow is as follows:
1. A Multi-access PDU Session is established, e.g. as described in 3GPP TS 23.502 4.22.2. As mentioned above, in some example embodiments, a "normal" PDU session may be established.
2. The PCF(s) that manage the AM policies, UE policies, and the Multi-access PDU Session of the UE subscribes to the UDR for receiving notifications about "UE-energy-data" of this UE using the Nudr_DM_Subscribe service.
3. An AF provides a report of UE energy data (e.g. via the NEF), which is stored in the UDR. This data may include one or more of the following:
   i. Current battery level and/or indication that the battery level crossed a predefined ("battery level threshold crossing"),
   ii. Indication of battery saver mode or battery charging status,
   iii. Performance statistics (e.g. round-trip times between the UE and the core network) per access type, and
   iv. Individual UE energy consumption statistics per access type.

From UDR side, this action may be implemented by using Nudr_DM service while extending and invoking the Nnef_ServiceParameter service on the NEF side. From NEF side, this action may be implemented by extending and invoking the Nnef_ServiceParameter service and/or the Nnef_AMPolicyAuthorization service. Alternatively or in addition, a new service, e.g. Nnef_EnergyInfluence, may be defined which, operating in a similar manner to the aforementioned ones, can be used in order to provide UE- or PDU-Session-related data from an AF via the NEF to the UDR.
4. The UDR notifies the PCF(s) about UE energy data that have subscribed in step 2 using the Nudr_DM_Notify service. Instead of actions 2, 3, and 4, an alternative implementation could use new types of NAS messages and/or interactions of involved NFs with the PMF (Performance Measurement Functionality) to collect the mentioned UE energy data in the 5G Core Network (without AF/NEF/UDR involvement).
5. The PCF(s) optionally trigger the procedure of Fig. 2 in order to retrieve analytics about energy consumption data of cases in which same device types, RATs/frequencies, and/or access types were used (in general, which belong to the same averaging criterion). An averaging criterion is a criterion, all the data sets used in the statistics have to fulfil.
6-8. The PCF determines the AM, UE, and ATSSS policies and rules as described in the respective sections of 3GPP TS 23.503, but taking into consideration the energy-related data received in steps 4 and, optionally, step 5, optimizing the expected energy consumption of the UE.

The flow of procedure 2, shown in Fig. 2, is as follows:
1. The PCF subscribes to UE energy analytics using the Nnwdaf_AnalyticsSubscription_Subscribe service, as described in 3GPP TS 23.288 clause 6.1. In order to enable this, a new AnalyticsID (e.g. "UE_ENERGY_STATS") is defined, along with the AnalyticslD-specific inputs and outputs required in this case. The main additional input are the "averaging criteria", which indicate to the NWDAF which energy data (e.g. energy consumption data) of other UEs to consider as relevant. Some example values of the "averaging criteria" are one or more of "RAT type", "Frequency", "Access type", "Device type". For example, if "Frequency" and "Device type" are provided in the averaging criteria, the NWDAF will use data from UEs of the same type that used the same frequencies in order to provide the analytics.
2. The NWDAF collects the required energy data from the AF(s) by subscribing to the Naf_EventExposure service, but for a new type of exposed data, e.g. "UE-energy-data", which include the data described in action 3 of Fig. 1, but for a plurality of UEs.
3. The NWDAF also collects information about the used access types and RAT types (and potentially also frequencies) using the Nsmf_EventExposure service (as already done for other types of analytics computed by the NWDAF, e.g. Observed Service Experience analytics in 3GPP TS 23.288, clause 6.4). The information may be collected via other means, e.g. frequency used may be collected via MDT (Minimization of Drive Tests) measurements.
4. The NWDAF provides to PCF average energy consumption statistics per the averaging criteria provided in step 1 using Nnwdaf_AnalyticsSubscription_Notify.

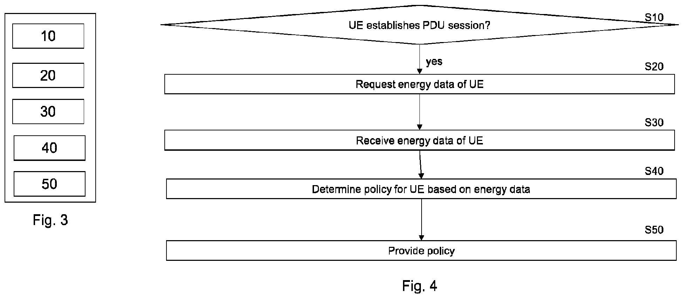

Fig. 3 shows an apparatus according to an example embodiment of the invention. The apparatus may be a policy control function (such as a PCF) or an element thereof. Fig. 4 shows a method according to an example embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises means for monitoring 10, means for requesting 20, means for receiving 30, means for determining 40, and means for providing 50. The means for monitoring 10, means for requesting 20, means for receiving 30, means for determining 40, and means for providing 50 may be a monitoring means, requesting means, receiving means, determining means, and providing means, respectively. The means for monitoring 10, means for requesting 20, means for receiving 30, means for determining 40, and means for providing 50 may be a monitor, requestor, receiver, determiner, and provider, respectively. The means for monitoring 10, means for requesting 20, means for receiving 30, means for determining 40, and means for providing 50 may be a monitoring processor, requesting processor, receiving processor, determining processor, and providing processor, respectively.

The means for monitoring 10 monitors whether a terminal establishes a PDU session (S10). If the terminal establishes the PDU session (S10 = yes), the means for requesting 20 requests energy data (such as energy consumption data and/or energy status data) of the terminal (S20). The means for receiving 30 receives the energy data of the terminal (S30).

The means for determining 40 determines a policy for the PDU session of the terminal based on the energy data of the terminal (S40). The means for providing 50 provides the policy to at least one of the terminal and a network function (such as a PEF) involved in the PDU session of the first terminal (S50).

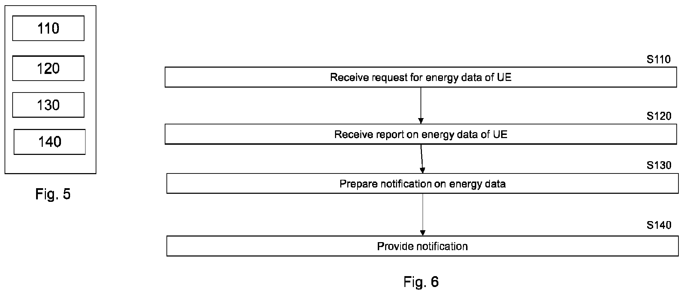

Fig. 5 shows an apparatus according to an example embodiment of the invention. The apparatus may be a data repository (such as a UDR) or an element thereof. Fig. 6 shows a method according to an example embodiment of the invention. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises first means for receiving 110, second means for receiving 120, means for preparing 130, and means for providing 140. The first means for receiving 110, second means for receiving 120, means for preparing 130, and means for providing 140 may be a first receiving means, second receiving means, preparing means, and providing means, respectively. The first means for receiving 110, second means for receiving 120, means for preparing 130, and means for providing 140 may be a first receiver, second receiver, preparer, and provider, respectively. The first means for receiving 110, second means for receiving 120, means for preparing 130, and means for providing 140 may be a first receiving processor, second receiving processor, preparing processor, and providing processor, respectively.

The first means for receiving 110 receives a request for energy data of a terminal (S110). The second means for receiving 120 receives a report on energy data for the terminal (S120). S110 and S120 may be performed in an arbitrary sequence. They may be performed fully or partly in parallel.

The means for preparing 130 prepares a notification on energy data of the terminal based on the report on energy data for the terminal (S130). The means for providing 140 provides the notification on energy data in response to the request (S140).

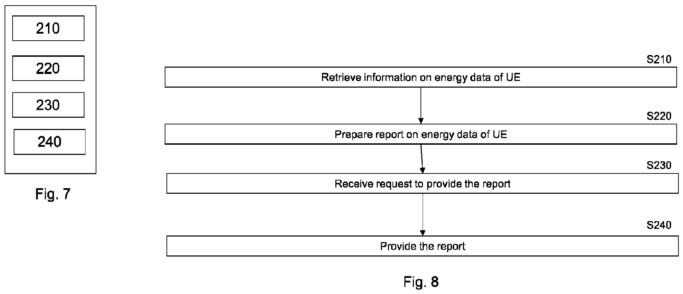

Fig. 7 shows an apparatus according to an example embodiment of the invention. The apparatus may be an application function (such as an AF) or an element thereof. Fig. 8 shows a method according to an example embodiment of the invention. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises means for retrieving 210, means for preparing 220, means for receiving 230, and means for providing 240. The means for retrieving 210, means for preparing 220, means for receiving 230, and means for providing 240 may be a retrieving means, preparing means, receiving means, and providing means, respectively. The means for retrieving 210, means for preparing 220, means for receiving 230, and means for providing 240 may be a retriever, preparer, receiver, and provider, respectively. The means for retrieving 210, means for preparing 220, means for receiving 230, and means for providing 240 may be a retrieving processor, preparing processor, receiving processor, and providing processor, respectively.

The means for retrieving 210 retrieves information about energy data of a terminal (S210). E.g. it may retrieve the energy data from the terminal. The means for preparing 220 prepares a report on the energy data of the terminal (S220).

The means for receiving 230 receives a request to provide the report (S230). S210 and S230 may be performed in an arbitrary sequence. They may be performed fully or partly in parallel.

The means for providing 240 provides the report in response to the request (S240).

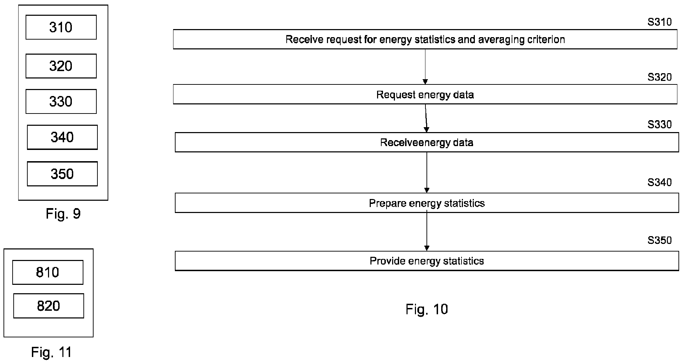

Fig. 9 shows an apparatus according to an example embodiment of the invention. The apparatus may be an analytics function (such as a NWDAF) or an element thereof. Fig. 10 shows a method according to an example embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises means for receiving 310, means for requesting 320, means for receiving 330, means for preparing 340, and means for providing 350. The means for receiving 310, means for requesting 320, means for receiving 330, means for preparing 340, and means for providing 350 may be a receiving means, requesting means, receiving means, preparing means, and providing means, respectively. The means for receiving 310, means for requesting 320, means for receiving 330, means for preparing 340, and means for providing 350 may be a receiver, requestor, receiver, preparer, and provider, respectively. The means for receiving 310, means for requesting 320, means for receiving 330, means for preparing 340, and means for providing 350 may be a receiving processor, requesting processor, receiving processor, preparing processor, and providing processor, respectively.

The means for receiving 310 receives a request for energy statistics and an averaging criterion (S310). The means for requesting 320 requests energy data of a plurality of terminals fulfilling the averaging criterion (S320). For example, it may request the energy data from the terminal and/or from an application function. S310 and S320 may be performed in an arbitrary sequence. They may be performed fully or partly in parallel.

The means for receiving 330 receives the energy data of the plurality of terminals in response to the request for the energy data (S330). The means for preparing 340 prepares energy statistics based on the energy data and the averaging criterion (S340). The means for providing 350 provides the energy statistics in response to the request for energy statistics.

Fig. 11 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 4, 6, 8, and 10 and related description.

Some example embodiments are described where a data consumer subscribes to a notification from a data producer. In some example embodiments, instead, the data consumer may request the data producer to provide the data in response to the request. In that sense, the subscription may be considered as a request to provide the data, too.

Some example embodiments are explained with respect to a 5G network. However, the invention is not limited to 5G. It may be used in other networks, too, e.g. in previous of forthcoming generations of 3GPP networks such as 4G, 6G, or 7G, etc. The invention is not limited to 3GPP communication networks (including 3GPP access and optional non-3GPP access) but may be applied non-3GPP mobile communication networks, too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

If the present application, and in particular the claims, describe a "first [entity]" and a "second [entity]", these entities may be the same or different from each other unless it is explicitly stated or made clear from the context that only one of these options is applicable.

According to the above description, it should thus be apparent that example embodiments of the present invention provide, for example, a trust engine (such as a AI trust engine) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a trust manager (such as a AI trust manager) or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

## Claims

1. Apparatus comprising:
one or more processors, and memory storing instructions that, when executed by the one or more processors, cause the apparatus to perform:
monitoring whether a first terminal establishes a protocol data unit session;
requesting energy data of the first terminal if the first terminal establishes the protocol data unit session;
receiving the energy data of the first terminal;
determining a policy for the protocol data unit session of the first terminal based on the energy data of the first terminal;
providing the policy to at least one of the first terminal and a network function involved in the protocol data unit session of the first terminal.

2. The apparatus according to claim 1, wherein the instructions, when executed by the one or more processors, further cause the apparatus to perform:
requesting network analytics data related to energy statistics according to an averaging criterion;
receiving the network analytics data in response to the request; wherein
the policy for the protocol data unit session is determined additionally based on the network analytics data.

3. The apparatus according to claim 2, wherein the averaging criterion comprises at least one of terminals of a same type as the first terminal, a same radio access technology as the one used by the first terminal, a same frequency of the radio access technology as the one used by the first terminal, and a same access type as the one used by the first terminal.

4. The apparatus according to any of claims 1 to 3, wherein the instructions, when executed by the one or more processors, cause the apparatus to receive the energy data using non-access stratum signaling.

5. Apparatus comprising:
one or more processors, and memory storing instructions that, when executed by the one or more processors, cause the apparatus to perform:
receiving a request for energy data of a terminal;
receiving a report on energy data for the terminal;
preparing a notification on energy data of the terminal based on the report on energy data for the terminal;
providing the notification on energy data in response to the request.

6. Apparatus comprising:
one or more processors, and memory storing instructions that, when executed by the one or more processors, cause the apparatus to perform:
retrieving information about energy data of a terminal;
preparing a report on the energy data of the terminal;
receiving a request to provide the report;
providing the report in response to the request.

7. Apparatus comprising:
one or more processors, and memory storing instructions that, when executed by the one or more processors, cause the apparatus to perform:
receiving a request for energy statistics and an averaging criterion;
requesting energy data of a plurality of terminals fulfilling the averaging criterion;
receiving the energy data of the plurality of terminals in response to the request for the energy data;
preparing energy statistics based on the energy data and the averaging criterion;
providing the energy statistics in response to the request for energy statistics.

8. The apparatus according to claim 7, wherein the averaging criterion comprises at least one of a type of the terminals, a radio access technology used by the terminals, a frequency of the radio access technology used by the terminals, and an access type used by the terminals.

9. The apparatus according to any of claims 7 and 8, wherein the energy data comprise one or more of the following:
• a respective battery level of each of the terminals;
• a respective battery level threshold crossing of each of the terminals;
• a respective indication of a battery saver mode of each of the terminals;
• a respective indication of a battery charging status of each of the terminals;
• a respective performance statistics for each of the terminals; and
• a respective energy consumption statistics for each of the terminals.

10. The apparatus according to any of claims 7 to 9, wherein the instructions, when executed by the one or more processors, cause the apparatus to perform for each of the terminals:
collecting information about a respective access type and/or information about a respective radio access technology;
determining if the respective terminal fulfills the averaging criterion based on the collected information.

11. Method comprising:
monitoring whether a first terminal establishes a protocol data unit session;
requesting energy data of the first terminal if the first terminal establishes the protocol data unit session;
receiving the energy data of the first terminal;
determining a policy for the protocol data unit session of the first terminal based on the energy data of the first terminal;
providing the policy to at least one of the first terminal and a network function involved in the protocol data unit session of the first terminal.

12. Method comprising:
receiving a request for energy data of a terminal;
receiving a report on energy data for the terminal;
preparing a notification on energy data of the terminal based on the report on energy data for the terminal;
providing the notification on energy data in response to the request.

13. Method comprising:
retrieving information about energy data of a terminal;
preparing a report on the energy data of the terminal;
receiving a request to provide the report;
providing the report in response to the request.

14. Method comprising:
receiving a request for energy statistics and an averaging criterion;
requesting energy data of a plurality of terminals fulfilling the averaging criterion;
receiving the energy data of the plurality of terminals in response to the request for the energy data;
preparing energy statistics based on the energy data and the averaging criterion;
providing the energy statistics in response to the request for energy statistics.

15. A computer program product comprising a set of instructions which, when executed on an apparatus, is configured to cause the apparatus to carry out the method according to any of claims 11 to 14.
